# EUROPÄISCHE PATENTSCHRIFT

(11) **EP 2 377 184 B1**
(45) Veröffentlichungstag und Bekanntmachung des Hinweises auf die Patenterteilung: **30.04.2014**
(21) Anmeldenummer: 09774841.2
(22) Anmeldetag: 11.12.2009
(51) Int. Cl.: H01M 2/10, H01M 10/42, H01M 10/60, H01M 10/02, H01M 10/052, H01M 10/34, B60L 11/18

(54) **VORRICHTUNG ZUR SPANNUNGSVERSORGUNG EINES KRAFTFAHRZEUGS MIT OPTIMIERTER WÄRMEABFÜHRUNG**
DEVICE FOR POWER SUPPLY OF A VEHICLE WITH OPTIMIZED HEAT DISSIPATION
DISPOSITIF D'ALIMENTATION EN TENSION POUR UN VÉHICULE AVEC UNE DISSIPATION THERMIQUE AMÉLIORÉE

(30) Priorität: 14.01.2009 DE 102009004543
(43) Veröffentlichungstag der Anmeldung: 19.10.2011
(73) Patentinhaber: Bayerische Motoren Werke Aktiengesellschaft, 80809 München (DE)
(72) Erfinder: ECKSTEIN, Frank, 80333 München (DE); LATH, Björn, 80805 München (DE); GOESMANN, Hubertus, 89564 Nattheim-Auernheim (DE); DIRMEIER, Micha, 80809 München (DE); MEIJERING, Alexander, 80809 München (DE); Petz, Philipp, 81379 München (DE); FLAHAUT, Nicolas, 81547 München (DE)
(74) Vertreter: Diener, Reinhold Jürgen
(86) Internationale Anmeldenummer: PCT/EP2009/008865
(87) Internationale Veröffentlichungsnummer: WO 2010/081510

(56) Entgegenhaltungen:
- WO-A1-2007/033651
- WO-A1-2007/053992
- WO-A2-2007/076985
- WO-A2-2008/106946
- DE-A1- 10 238 235
- FR-A1- 2 782 399

## Beschreibung

Die Erfindung betrifft eine Vorrichtung zur Spannungsversorgung eines Kraftfahrzeugs, insbesondere eines Pkw, Lkw oder eines Motorrads, mit einer Speicherzellenanordnung, die ein oder mehrere elektrochemische Speicherzellen und/oder Doppelschichtkondensatoren umfasst, die übereinander angeordnet sind.

Elektrochemische Speicherzellen und/oder Doppelschichtkondensatoren können im Betrieb erhebliche Temperaturen erreichen, so dass eine Kühlung notwendig ist. Die Kühlung der elektrochemischen Speicherzellen erfolgt von außen. Kann eine ausreichende Kühlung nicht mit hinreichender Sicherheit gewährleistet werden, so können rasch Defekte auftreten, die mit den Anforderungen an die Lebensdauer bei einer Verwendung in Automobilen wirtschaftlich nicht vereinbar sind.

Eine gattungsgemäß ausgebildete Vorrichtung zur Spannungsversorgung eines Fahrzeugs ist aus der DE 102 38 235 A1 bekannt.

Aus der DE 10 2007 021 293 A1 ist eine Antriebsbatteriebaugruppe eines Elektro-, Brennstoffzellen- oder Hybridfahrzeugs bekannt, bei der ein oder mehrere Lamellen genannte Profilelemente von mit Kühlmedium durchströmten Kühlrohren ausgehen. Nachteilig an dieser Anordnung ist der komplexe Aufbau der Antriebsbatteriebaugruppe, welcher im Fall eines Defekts den kompletten Austausch der Antriebsbatteriebaugruppe erforderlich macht.

Es ist daher Aufgabe der vorliegenden Erfindung, eine dahingehend einfacher aufgebaute Vorrichtung zur Spannungsversorgung eines Kraftfahrzeugs, insbesondere für den elektromotorischen Antrieb des Kraftfahrzeugs, bereitzustellen, bei der viele Gleichteile einsetzbar sind und für die der konstruktive Aufwand gering ist und bei der durch eine Kühleinrichtung eine dennoch ausreichende Kühlung mit hoher Sicherheit gewährleistet werden kann.

Diese Aufgabe wird durch eine Vorrichtung zur Spannungsversorgung gemäß den Merkmalen des Patentanspruches 1 gelöst. Vorteilhafte Ausgestaltungen ergeben sich aus den abhängigen Patentansprüchen.

Die Erfindung schafft eine Vorrichtung zur Spannungsversorgung eines Kraftfahrzeugs, insbesondere eines Pkw, eines Lkw oder eines Motorrads, mit einer Speicherzellenanordnung, die ein oder mehrere elektrochemische Speicherzellen und/oder Doppelscruchtkon-densatoren umfasst, die übereinander angeordnet sind. Erfindungsgemäß ist die Speicherzellenanordnung mit einer Wärme leitenden Kühleinrichtung, die die von den Speicherzellen und/oder Doppelschichtkondensatoren zugeführte Wärme abführt, derart kraftschlüssig lösbar verbindbar, dass zumindest manche der Speicherzellen und/oder Doppelschichtkondensatoren einer jeweiligen Speicherzellengruppe jeweils mit der Wärme leitenden Kühleinrichtung thermisch verbindbar sind.

Ein Vorteil der erfindungsgemäßen Vorrichtung besteht in einem einfachen, modularen Aufbau, bei dem viele Gleichteile einsetzbar sind. Die Vorrichtung umfasst zwei kraftschlüssig miteinander verbindbare und voneinander lösbare Hauptbestandteile, die jeweils als Gleichteile ausgebildet werden können. Zum einen die auch als Modul bezeichnete, eigenständige Speicherzellenanordnung, welche lediglich (passive) Wärme leitende Elemente zwischen den Speicherzellen und/oder Doppelschichtkondensatoren umfasst. Zum anderen die Wärme leitende Vorrichtung, welche die zur Zellkühlung notwendigen Elemente umfasst. Die Kühlung der Speicherzellen kann nur dann erfolgen, wenn die Speicherzellenanordnung und die Kühlelemente mechanisch miteinander verbunden sind, da nur dann die notwendige thermische Kopplung der beiden Komponenten zueinander besteht.

Bei den elektrochemischen Speicherzellen handelt es sich bevorzugt um Lithium-basierte Batteriezellen oder um Nickel-Metall-Hybrid-Akkumulatoren, die sich durch hohe Speicherkapazität bei geringem Volumen auszeichnen. Die Speicherzellen oder Doppelschichtkondensatoren weisen jeweils einen kreisförmigen Querschnitt auf. Entsprechend den Anforderungen können so Speicherzellenanordnungen bzw. Module aus mehreren Speicherzellen und/oder Doppelschichtkondensatoren gebildet werden, die eine hohe Packungsdichte aufweisen. Zur elektrischen Isolation sind deren Umfangsflächen elektrisch isolierend ausgeführt oder mit einer elektrisch isolierenden und vorzugsweise gut Wärme leitenden Schicht versehen.

Die Speicherzellenanordnung umfasst eine Speicherzellen- und/oder Doppelschichtkondensatorgruppe. Eine solche Gruppe kann zwei oder mehr nebeneinander benachbarte Speicherzellen bzw. Doppelschichtkondensatoren umfassen. Dabei sind die Speicherzellen und/oder Doppelschichtkondensatoren einer jeweiligen Speicherzellengruppe durch zumindest ein Wärme leitendes Profilelement thermisch miteinander verbunden, was einen Wärmeübergang zwischen den Speicherzellen und/oder Doppelschichtkondensatoren der Speicherzellengruppe ermöglicht.

Neben einer guten Anbindung der Speicherzellenanordnung an die Wärme leitende Kühleinrichtung wird eine gleichmäßige Temperaturverteilung zwischen den Speicherzellen bzw. Doppelschichtkondensatoren der Speicherzellenanordnung erreicht. Erzielt wird dies durch einen thermischen Ausgleich zwischen benachbarten Speicherzellen bzw. Doppelschichtkondensatoren einer Speicherzellen- bzw. Doppelschichtkondensatorgruppe. Der konstruktive Aufwand hier ist gering. Durch die gleichmäßige Temperaturverteilung zwischen benachbarten Speicherzellen bzw. Doppelschichtkondensatoren wird eine hohe Lebensdauer der erfindungsgemäßen Vorrichtung erreicht.

Um eine gute Wärmeleitung sowie einen Toleranzausgleich zwischen der Wärme leitenden Kühleinrichtung und den Speicherzellen und/oder den Doppelschichtkondensatoren zu erhalten, kann zwischen diesen Elementen eine elastische, Wärme leitende Schicht vorgesehen sein. Um eine gute Wärmeleitung zwischen den Speicherzellen und/oder Doppelschichtkondensatoren sowie den Profilelementen zu erhalten, können diese miteinander verklebt sein, wobei vorzugsweise ein Wärme leitender Kleber zum Einsatz kommt.

Um nicht nur einen thermischen Ausgleich zwischen den benachbarten Speicherzellen bzw. Doppelschichtkondensatoren einer Speicherzellengruppe zu erzielen, sondern auch eine möglichst gute Wärmeabfuhr in Richtung der Wärme leitenden Kühleinrichtung zu erhalten, ist vorgesehen, dass die Wärme leitende Kühleinrichtung mit dem zumindest einen Profilelement in thermischem Kontakt steht. Je nach Ausgestaltung des zumindest einen Profilelements kann die Wärme leitende Kühleinrichtung ausschließlich mit dem Profilelement in Kontakt stehen. Ebenso kann der thermische Kontakt sowohl zwischen dem Profilelement als auch einer der Speicherzellen bzw. Doppelschichtkondensatoren vorgesehen sein.

Die Speicherzellen und/oder Doppelschichtkondensatoren der Speicherzellenanordnung eine Mantelfläche sowie eine durch die Mantelfläche verbundene Kreisförmige Grund- und Deckfläche mit jeweiligen Elektroden auf, wobei das zumindest eine Profilelement zumindest mit den Mantelflächen der Speicherzellen- und/oder Doppelschichtkondensatoren einer Speicherzellengruppe in thermischem Kontakt steht. Aufgrund der großen Wärmeübertragungsfläche wird hierdurch die gleichmäßige Temperaturverteilung zwischen den Speicherzellen bzw. Doppelschichtkondensatoren einer Speicherzellengruppe begünstigt.

Um die Wärmeleitung weiter zu verbessern, ist das zumindest eine Profilelement aus einem gut Wärme leitenden Material, insbesondere einem Metallblech oder einer (im Vergleich dazu dickeren) Metallschale oder einem gefüllten Kunststoffelement, gebildet.

Das zumindest eine Profilelement weist eine an die Oberflächengestalt der Mantelflächen der Speicherzellen und/oder Doppelschichtkondensatoren einer Speicherzellengruppe angepasste Form auf. Auch hierdurch wird der Wärmeaustausch zwischen benachbarten Speicherzellen bzw. Doppelschichtkondensatoren als auch die Wärmeübertragung zu der Wärme leitenden Kühleinrichtung begünstigt.

Das zumindest eine Profilelement weist einen flügelartigen Querschnitt auf, welcher einen ersten und einen zweiten Anlageabschnitt umfasst. Der erste Anlageabschnitt steht mit einer Mantelfläche einer ersten Speicherzelle und/oder eines ersten Doppelschichtkondensators der Speicherzellengruppe in thermischem Kontakt. Der zweite Anlageabschnitt steht mit der Mantelfläche einer zweiten Speicherzelle und/oder eines zweiten Doppelschichtkondensators der Speicherzellengruppe in thermischem Kontakt. Dabei sind der erste und der zweite Anlageabschnitt in einem Bereich zwischen der ersten und der zweiten Speicherzelle und/oder dem Doppelschichtkondensator einstückig miteinander verbunden. Durch den flügelartigen Querschnitt ist sichergestellt, dass das Profilelement großflächig mit den Speicherzellen und/oder Doppelschichtkondensatoren zumindest einer Speicherzellen- bzw. Doppelschichtkondensatorengruppe in Kontakt ist. Durch diese hierbei geschaffene großflächige Verbindung wird die gleichmäßige Temperaturverteilung bewirkt. Darüber hinaus kann auch die Wärmeabfuhr über das Profilelement zu der Wärme leitenden Kühleinrichtung begünstigt werden. Durch den flügelartigen Querschnitt wird darüber hinaus die Montage der erfindungsgemäßen Vorrichtung erleichtert.

Zweckmäßigerweise schließt sich an die freien Enden des ersten und des zweiten Anlageabschnitts des zumindest einen Profilelements jeweils ein dritter Anlageabschnitt an, der mit der Wärme leitenden Kühleinrichtung in mechanischem und thermischem Kontakt steht. Durch das Vorsehen eines dritten Anlageabschnitts braucht an die Form der Wärme leitenden Kühleinrichtung keine besondere Anforderung gestellt werden. Insbesondere kann die Wärme leitende Kühleinrichtung eine plane Fläche aufweisen, weiche mit den jeweils dritten Anlageabschnitten einer Mehrzahl der Profilelemente in Kontakt gebracht ist.

In einer alternativen Ausgestaltung steht ein Teil des ersten und des zweiten Anlageabschnitts jeweils mit der Wärme leitenden Kühleinrichtung in mechanischem und thermischem Kontakt. Diese Ausgestaltung erfordert eine formangepasste Wärme leitende Kühleinrichtung, durch die eine hervorragende Wärmeübertragung von den Speicherzellen bzw. Doppelschichtkondensatoren sichergestellt ist.

Insbesondere kommen der erste bzw. der zweite Anlageabschnitt des zumindest einen Profilelements jeweils in einem der Wärme leitenden Kühleinrichtung zugewandten Bereich in einer gemeinsamen ersten bzw. in einer gemeinsamen zweiten Ebene zum Liegen. Hierdurch kann eine jeweilige plane Wandung der Wärme leitenden Kühleinrichtung in mechanischen und thermischen Kontakt mit dem ersten und dem zweiten Anlageabschnitt gebracht werden.

In einer weiteren Ausgestaltung sind zwischen zwei übereinander angeordneten Speicherzellengruppen zwei Profilelemente symmetrisch bezüglich einer Ebene angeordnet, welche senkrecht zur Erstreckungsrichtung der Speicherzellengruppen verläuft. Die zwei Profilelemente können einstückig ausgebildet oder durch zwei separate Bauteile gebildet sein. Hierdurch wird ebenfalls eine einfache Montage gewährleistet. Sind die zwei Profilelemente einstückig ausgebildet, so wird hierdurch auch ein Wärmeaustausch zwischen zwei übereinander angeordneten Speicherzellen- bzw. Doppelschichtkondensatorgruppen ermöglicht.

Um eine hohe mechanische Stabilität der erfindungsgemäßen Vorrichtung zu gewährleisten ist weiterhin vorgesehen, dass zwischen den zwei Profilelementen ein formangepasstes Trägerelement, insbesondere aus Kunststoff, vorgesehen ist. Es ist gegebenenfalls zweckmäßig, wenn der Kunststoff ebenfalls gut Wärme leitend ist, da dann auch ein Wärmeaustausch zwischen zwei benachbarten Speicherzellen- und/oder Doppelschichtkondensatorgruppen erfolgen kann.

Die Wärme leitende Kühleinrichtung umfasst eine Kühlerwand, welche an den Seitenwänden der Speicherzellenanordnung vorgesehen ist und Kühlkanäle aufweist, die von einem Wärme abführenden Medium, insbesondere einem Kältemittel, wie R 134a, Kohlendioxid, R 744, Wasser oder Luft, durchströmt oder umströmt werden. Hierdurch kann die Wärmeabfuhr stets in zuverlässiger und ausreichender Weise, auch bei kurzzeitigen Spitzenbelastungen der Speicherzelle, sichergestellt werden. Die Kühlkanäle können z.B. in einen Kreislauf einer Klimaanlage des Kraftfahrzeugs eingebunden sein.

Gemäß einer weiteren zweckmäßigen Ausgestaltung umfasst die Kühlerwand eine plane Fläche, mit der sie an den dritten Anlageabschnitten des zumindest einen Profilelements anliegt. Ein Vorteil dieser Ausgestaltung besteht darin, dass eine Montage der Vorrichtung in Erstreckungsrichtung der übereinander angeordneten Speicherzellen- bzw. Doppelschichtkondensatorgruppen ermöglicht ist. Hierdurch ist beispielsweise auch ein einfacher Austausch im Falle eines Defekts der Vorrichtung möglich, ohne die Kühleinrichtung austauschen zu müssen.

In einer alternativen Ausgestaltung weist die Kühlerwand eine zu der Speicherzellenanordnung inverse Gestalt auf. Insbesondere ist in dieser Ausgestaltung ein Graben zwischen zwei Speicherzellen und/oder Doppelschichtkondensatoren vorgesehen, wobei in dem Graben ein Kühlkanal verläuft. Hierdurch kann die Speicherzellenanordnung lediglich in axialer Richtung der Speicherzellen bzw. Doppelschichtkondensatoren in die Wärme leitende Kühleinrichtung eingebracht werden. Allerdings können die in den Gräben angeordneten Kühlkanäle besonders nah an die Speicherzellen bzw. Doppelschichtkondensatoren herangeführt werden, so dass eine optimierte Wärmeabfuhr ermöglicht ist.

Um die Wärmeabfuhr weiter zu verbessern, ist ferner vorgesehen, dass die an den zwei gegenüber liegenden Seiten der Speicherzellenanordnung vorgesehenen Wärme leitenden Kühleinrichtungen zwischen zumindest zwei Speicherzellen und/oder Doppelschichtkondensatoren (bzw. Speicherzellengruppen und/oder pen) miteinander verspannt sind, um eine Anpresskraft zwischen den Profilelementen und den Speicherzellen zu erzeugen. Gleichzeitig werden auch die Wärme leitenden Kühleinrichtungen an die Speicherzellen bzw. Doppelschichtkondensatoren gepresst. Hierdurch kann die Wärmeübertragung verbessert werden.

Es ist ferner vorgesehen, dass die Wärme leitende Kühleinrichtung einen an die Gestalt der Speicherzellenanordnung angepassten Wärmeleitkörper umfasst, mit dem die Kühlerwand Wärme leitend verbunden ist. Hierdurch wird eine einfache und kostengünstigere Fertigung der Vorrichtung ermöglicht, da der Wärmeleitkörper, beispielsweise aus einem einstückigen Metall (und ohne Kühlkanäle) gebildet wird. Demgegenüber kann die Kühlerwand mit planen Flächen ausgebildet werden, in welcher die Kühlkanäle angeordnet sind.

Eine weitere Ausgestaltung sieht vor, dass die Speicherzellenanordnung in Erstreckungsrichtung der übereinander angeordneten Speicherzellen- und/oder Doppelschichtkondensatorgruppen durch zumindest eine Spannvorrichtung, insbesondere aus Kunststoff, mit einer Vorspannkraft beaufschlagt sind. Die Vorspannkraft kann durch Verschweißung, Verschraubung, einen Spanngurt, einen Spannstift oder Spanndraht und dergleichen erzeugt sein. Es ist ferner zweckmäßig, wenn in axialer Richtung der Speicherzellen und/oder Doppelschichtkondensatoren eine weitere Spannvorrichtung vorgesehen ist, welche kraft- und/oder formschlüssig mit der oben genannten Spannvorrichtung verbunden ist. Hierdurch wird die zuvor genannte Spannvorrichtung in Position gehalten, so dass dadurch insgesamt eine kompakte, stabile Vorrichtung bereitgestellt ist.

Die Erfindung wird nachfolgend näher anhand von Ausführungsbeispielen in der Zeichnung beschrieben. Es zeigen:
- Fig. 1: einen Ausschnitt einer erfindungsgemäßen Vorrichtung zur Spannungsversorgung gemäß einer ersten Ausgestaltungsvariante,
- Fig. 2: einen Ausschnitt einer erfindungsgemäßen Vorrichtung zur Spannungsversorgung gemäß einer zweiten Ausgestaltungsvariante,
- Fig. 3: einen Ausschnitt einer erfindungsgemäßen Vorrichtung zur Spannungsversorgung gemäß einer dritten Ausgestaltungsvariante,
- Fig. 4: einen Ausschnitt einer erfindungsgemäßen Vorrichtung zur Spannungsversorgung gemäß einer vierten Ausgestaltungsvariante,
- Fig. 5a, 5b: perspektivische Darstellungen der erfindungsgemäßen Vorrichtung zur Spannungsversorgung gemäß der ersten Ausgestaltungsvariante, und
- Fig. 6a, 6b: perspektivische Darstellungen der erfindungsgemäßen Vorrichtung zur Spannungsversorgung gemäß der zweiten Ausgestaltungsvariante.

In den Figuren sind funktionsgleiche Bauteile mit den gleichen Bezugszeichen versehen. Die Zeichnungen stellen lediglich den prinzipiellen Aufbau einer erfindungsgemäßen Vorrichtung zur Spannungsversorgung dar, wobei die einzelnen Bestandteile der Vorrichtung nicht notwendigerweise maßstabsgerecht dargestellt sind.

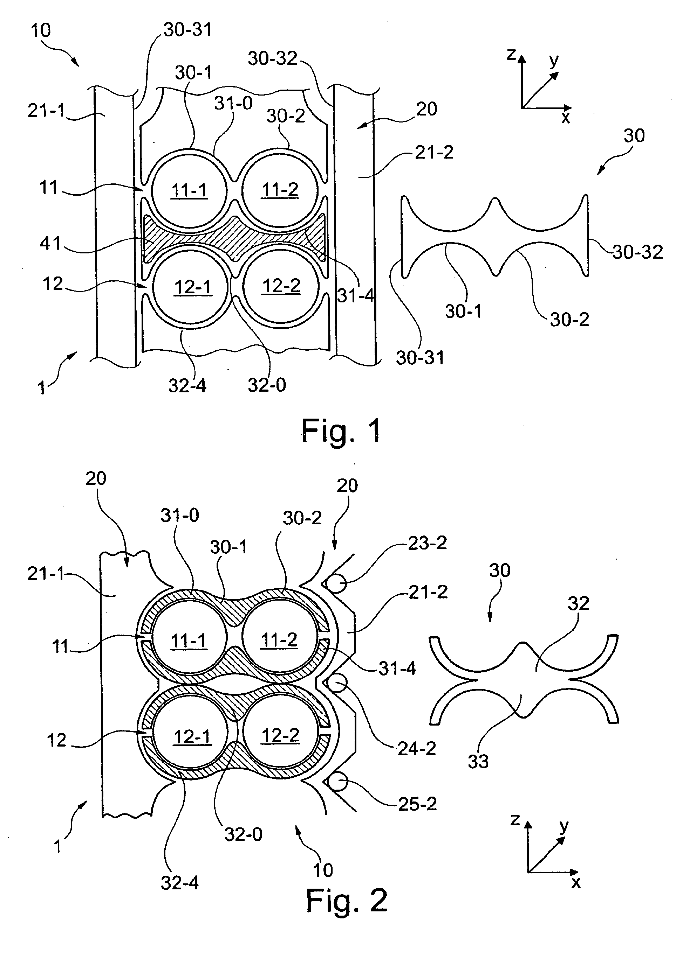

Die Fig. 1 bis 4 zeigen in schematischen Querschnittsdarstellungen einen Ausschnitt einer erfindungsgemäßen Vorrichtung 1 zur Spannungsversorgung eines Kraftfahrzeugs, insbesondere eines PKW oder eines Motorrads. Die Vorrichtung 1 zur Spannungsversorgung umfasst eine Speicherzellenanordnung 10 mit einer Anzahl an Speicherzellen und/oder Doppelschichtkondensatoren 11-1, 11-2, 12-1, 12-2. Um die nachfolgende Beschreibung zu erleichtern, ist lediglich auf Speicherzellen bzw. Speicherzellengruppen Bezug genommen. Dies ist jedoch nicht als einschränkend zu betrachten, vielmehr kann eine Speicherzelle bzw. Speicherzellengruppe auch durch einen Doppelschichtkondensator bzw. eine Doppelschichtkondensatorgruppe ersetzt sein.

Im ersten Ausführungsbeispiel der Fig. 1 sind zwei Speicherzellengruppen 11, 12 dargestellt, welche in einer Erstreckungsrichtung (d.h. in z-Richtung des dargestellten Koordinatensystems) übereinander angeordnet sind. Im Ausführungsbeispiel umfasst jede der Speicherzellengruppen zwei Speicherzellen 11-1, 11-2 bzw. 12-1, 12-2. Eine Speicherzellengruppe kann auch mehr als zwei nebeneinander, d.h. in x-Richtung bzw. senkrecht zur Erstreckungsrichtung, angeordnete Speicherzellen umfassen.

In bekannter Weise weist jede der Speicherzellen 11-1, 11-2, 12-1, 12-2 mindestens eine in der Speicherzelle angeordnete Elektrode (nicht dargestellt) aus Metall auf, wobei diese weitgehend ganzflächig mit einer Metallschicht versehen sein kann, was aus Fig. 1 ebenfalls nicht erkennbar ist. In ebenfalls bekannter Weise ist deren innen liegendes Anschlusselement (nicht dargestellt) mit einer außerhalb der jeweiligen Speicherzelle auf der Vorderseite versehenen Anschlussklemme bzw. mit einer außerhalb der Speicherzelle auf der Rückseite vorgesehenen Anschlussklemme elektrisch leitend verbunden. Bei der Anschlussklemme kann es sich um eine Kontaktfläche in Form eines Sockels, wie bei einem Batteriepol, der durch eine Kontaktfeder kontaktiert wird, handeln. Über die Anschlussklemmen sind die jeweiligen Speicherzellen 11-1, 11-2, 12-1, 12-2 der Speicherzellenanordnung 10 in Reihe und/oder parallel geschaltet, so dass an (nicht dargestellten) Anschlussstiften eine Gesamtspannung der Speicherzellenanordnung abgreifbar ist. Die Speicherzellenanordnung wird auch als Modul bezeichnet.

Beidseitig der Speicherzellengruppen 11, 12 ist eine Wärme leitende Kühleinrichtung 20 angeordnet, welche im Ausführungsbeispiel der Fig. 1 durch eine jeweilige Kühlerwand 21-1 und 21-2 gebildet ist. Die Kühlerwände 21-1, 21-2 sind mit der Speicherzellenanordnung Wärme leitend verbunden. In den Kühlerwänden 21-1, 21-2 sind nicht dargestellte Kühlkanäle vorgesehen, die von einem Wärme abführenden Medium, insbesondere einem Kättemittel, wie R 134a, Kohlendioxid, R 744, Wasser oder Luft, durchströmt oder umströmt werden. Da jede der Speicherzellengruppen 11, 12 im Ausführungsbeispiel lediglich zwei Speicherzellen 11-1, 11-2 bzw. 12-1, 12-2 aufweist, steht jede der Speicherzellen 11-1, 11-2, 12-1, 12-2 mit der Wärme leitenden Kühleinrichtung 20 bzw. einer der Kühlwände 21-1, 21-2, in thermischem Kontakt, so dass durch diese die von den Speicherzellen zugeführte Wärme abgeführt werden kann.

Um die Zuverlässigkeit der erfindungsgemäßen Vorrichtung 1 zur Spannungsversorgung weiter zu erhöhen, sind die Speicherzellen einer jeweiligen Speicherzellengruppe 11, 12 durch mindestens ein Wärme leitendes Profilelement thermisch miteinander verbunden, so dass ein Wärmeübergang zumindest zwischen den Speicherzellen 11-1 und 11-2 bzw. 12-1 und 12-2 der betreffenden Speicherzellengruppe 11 bzw. 12 ermöglicht ist. Im Ausführungsbeispiel der Fig. 1 sind vier solcher Profilelemente 31-o, 31-u, 32-o und 32-u dargestellt. Diese Profilelemente sind aus einem gut Wärme leitenden Material, vorliegend aus einem Metallblech gebildet. Die Profilelemente 31-u und 32-o können als separate Profilelemente ausgebildet sein. Ebenso können diese sowie alle zwischen zwei Speicherzellengruppen vorgesehenen Profilelemente auch einstückig ausgebildet sein, so dass sich das mit dem Bezugszeichen 30 gekennzeichnete Profilelement ergibt, das rechts neben der erfindungsgemäßen Vorrichtung exemplarisch dargestellt ist.

Die oberhalb und unterhalb einer Speicherzellengruppe angeordneten, z.B. eingelegten, Profilelemente verstärken die Wärmeleitung in den jeweiligen Mantelflächen der Speicherzellen. Die Profilelemente sorgen damit für einen guten thermischen Austausch in x-Richtung und gegebenenfalls, sofern die zwischen zwei Speicherzellengruppen vorgesehenen Profilelemente einstückig ausgebildet sind, auch in z-Richtung.

Die Kontur der Profilelemente im Querschnitt ist an die Form der Speicherzellen angepasst. So weisen die Profilelemente 31-o, 31-u, ... einen flügelartigen Querschnitt auf. Dabei weist jedes Profilelement einen ersten Anlageabschnitt 30-1 auf, der mit der Mantelfläche der in der Figur linken Speicherzelle (11-1, 12-1, ...) einer Speicherzellengruppe 11, 12 in thermischem Kontakt steht. Das Profilelement weist einen zweiten Anlageabschnitt 30-2 auf, der mit der Mantelfläche der in der Figur rechten Speicherzellen 11-2, 12-2 der Speicherzellengruppen 11, 12 in thermischem Kontakt steht. Der erste und der zweite Anlageabschnitt sind in einem Bereich zwischen der linken und der rechten Speicherzelle einstückig miteinander verbunden. Der erste und der zweite Anlageabschnitt 30-1 und 30-2 weisen damit eine großflächige Verbindung zu den Mantelflächen der Speicherzellen 11-1, 11-2 sowie 12-1, 12-2 auf, so dass ein guter thermischer Austausch zwischen den zwei Speicherzellen einer Speicherzellengruppe gewährleistet ist.

An den freien Enden des ersten und zweiten Anlageabschnitts 30-1, 30-2 schließen sich jeweils ein dritter Anlageabschnitt 30-31, 30-32 an, welche sich in z-Richtung des Koordinatensystems erstrecken und damit flächig mit den Kühlerwänden 21-1, 21-2 der Wärme leitenden Kühleinrichtung 20 in thermischem Kontakt stehen. Bei dieser Ausgestaltung sind die Speicherzellen damit über die Profilelemente an die Wärme leitende Kühleinrichtung 20 angebunden.

Zur Erhöhung der Stabilität sowie zur Erzeugung eines Drucks, mit dem die Profilelemente an die Speicherzellen gedrückt werden, sind zwischen jeweils zwei Profilelementen (hier: 31-u und 32-o) formangepasste Trägerelemente 41 vorgesehen. Die Trägerelemente sind aus Gewichtsgründen insbesondere aus einem Kunststoff gefertigt. Wie aus Fig. 1 ohne Weiteres ersichtlich ist, weisen die Trägerelemente 41 eine an die Gestalt der übereinander angeordneten Profilelemente 31-u und 32-o oder des einstückigen Profilelements 30 auf. Die Profilelemente liegen jeweils nur an drei Stellen, an den zwei Außenseiten sowie zwischen den zwei Speicherzellen, auf den Trägerelementen auf. Hierdurch wird eine ideale Anlage der Profilelemente an die Oberfläche der Speicherzellen bewirkt. Die Trägerelemente können beispielsweise durch ein PP-Formteil gebildet sein. Es ist bevorzugt, wenn die Trägerelemente gut Wärme leitend sind. Darüber hinaus sorgen die Trägerelemente 41 auch für eine gute Anlage der Profilelemente an den Speicherzellen.

Fig. 2 zeigt eine im Vergleich zur ersten Ausführungsvariante abgewandelte zweite Ausführungsvariante. Bei dieser sind die Profilelemente aus einem Wärme leitenden Material, insbesondere einer Metallschale, gebildet, welche jeweils einen ersten Anlageabschnitt 30-1 und einen zweiten Anlageabschnitt 30-2, jedoch keine dritte Anlageabschnitte aufweisen. Im Gegensatz zu den Metallblechen, welche im Ausführungsbeispiel der Fig. 1 verwendet wurden, sind die Metallschalen im Vergleich dazu dicker. Die Profilelemente können beispielsweise als Strangpressprofile ausgebildet sein. Wie im vorher beschriebenen Ausführungsbeispiel können die zwei zwischen zwei Speicherzellengruppen 11, 12 eingelegten Profilelemente (hier: 31-u und 32-o) als zwei separate Teile oder einstückig ausgebildet sein. Eine entsprechende Darstellung eines einstückig ausgebildeten Profilelements ist mit dem Bezugszeichen 30 rechts neben Fig. 2 dargestellt.

Aufgrund der nicht vorhandenen dritten Anlageabschnitte muss die Wärme leitende Kühleinrichtung 20 formangepasst an die Speicherzellenanordnung 10 ausgebildet sein. Die Wärmeabfuhr von den Speicherzellen 11-1, 11-2, 12-1, 12-2 zu den jeweils links und rechts der Speicherzellenanordnung 10 vorgesehenen Kühlerwänden 21-1 und 21-2 erfolgt wiederum über die Profilelemente (hier: 31-o, 31-u, 32-o, 32-u). Fig. 2 zeigt dabei zwei unterschiedliche Ausgestaltungsvarianten möglicher Kühlerwände. Auf der linken Seite der Speicherzellenvorrichtung verlaufen (nicht dargestellte) Kühlkanäle im Inneren der Kühlerwand 21-1. Die Kühlerwand 21-2 weist demgegenüber auf der von der Speicherzellenanordnung 10 abgewandten Seite im Bereich zwischen zwei übereinander angeordneten Speicherzellengruppen 11, 12 Gräben auf, in denen beispielhaft jeweils ein Kühlkanal 23-2, 24-2, 25-2 angeordnet ist. Die Kühlerwand 21-2 kann beispielsweise durch ein Wellblech gebildet sein, welches auf eine Platte aufgebracht ist. Beide Kühlerwände 21-1, 21-2 weisen, wie aus der Figur ohne Weiteres ersichtlich ist, die Eigenschaft auf, dass die der Speicherzellenanordnung zugewandte Seite 10 eine zu dieser inverse Form aufweist, so dass ein guter thermischer Kontakt zu den Profilelementen 31-o, 31-u, 32-o, 32-u gewährleistet ist.

Montagetechnisch bietet die erste Ausgestaltungsvariante, die in Fig. 1 dargestellt ist, Vorteile gegenüber der in Fig. 2 dargstellten Ausführungsvariante. Die mit den Profilelementen versehene Speicherzellenanordnung kann dort nämlich in y- oder in z-Richtung in die Wärme leitende Kühleinrichtung 20 eingebracht werden. Demgegenüber ist zum Zusammenfügen der Speicherzellenanordnung 10 (mit den darin bereits vorgesehenen Profilelementen) und der Kühleinrichtung 20 der zweiten Ausführungsvariante eine Montage in y-Richtung notwendig.

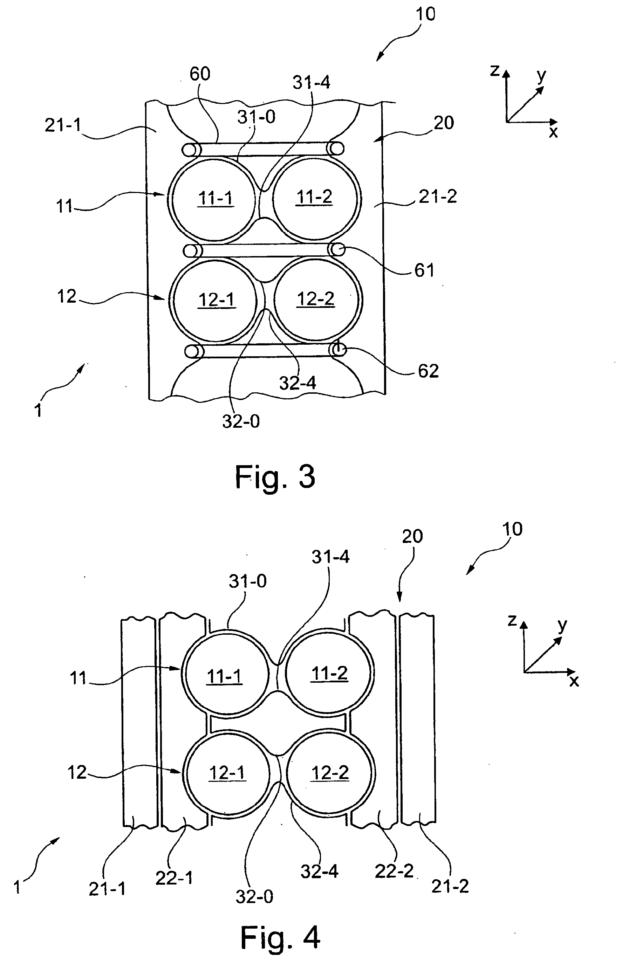

Fig. 3 zeigt eine dritte Ausgestaltungsvariante, welche als zusätzliches Ausgestaltungsmerkmal Verspannungen 60, 61, 62 umfasst, welche oberhalb und unterhalb bzw. zwischen jeweils zwei Speicherzellengruppen 11, 12 vorgesehen sind und die die seitlich der Speicherzellenanordnung 10 vorgesehenen Kühlerwände 21-1, 21-2 miteinander verspannen. Hierdurch wird eine Anpresskraft zwischen den Profilelementen und den Speicherzellen sowie den Profilelementen und den Kühlerwänden erzeugt, wodurch der Wärmeübergang erleichtert wird. Die in Fig. 3 dargestellten Kühlerwände 21-1, 21-2 können alternativ auch Wärmeleitkörper darstellen, welche mit ihren Außenseiten in Kontakt mit entsprechenden Kühlerwänden, in welchen Kühlkanäle geführt sind, in Kontakt gebracht werden. Dies weist den Vorteil der vereinfachten Montage in z-Richtung auf.

Fig. 4 zeigt eine weitere Abwandlung gegenüber den vorherigen Ausgestaltungsvarianten, wobei die Wärme leitende Kühleinrichtung 20 beidseitig der Speicherzellenanordnung 10 jeweils eine Kühlerwand 21-1, 21-2 mit einem Kühlmittel führenden Kühlkanal (nicht dargestellt) und einen Wärmeleitkörper 22-1, 22-2 (ohne Kühlkanäle) aufweist. Die Wärmeleitkörper 22-1, 22-2 können beispielsweise aus einem StrangpressprofiJ gebildet sein und eine an die Gestalt der Speicherzellenanordnung 10 angepasste inverse Form aufweisen. Im Bereich ihrer Außenseiten, in denen die Wärmeleitkörper 22-1, 22-2 mit den Kühlerwänden 21-1, 21-2 in Kontakt gebracht ist, weisen die Wärmeleitkörper und die Kühlerwände plane Flächen auf, um die Herstellung sowie Montage zu erleichtern. Die Wärmeleitkörper 22-1, 22-2 sind nach Art der vorherigen Ausführungsvarianten in thermischen Kontakt mit den Profilelementen (hier: 31-o, 31-u, 32-o, 32-u) gebracht. Die Wärmeleitkörper 22-1, 22-2 ermöglichen darüber hinaus eine Temperaturverteilung in z-Richtung, d.h. in Richtung der übereinander angeordneten Speicherzellengruppen 11, 12.

In einer nicht dargestellten Ausführungsvariante können die aus einem Strangpressprofil gebildeten Profilelemente seitlich auch "abgeflacht" sein, so dass diese Bereiche in einer gemeinsamen Ebene zum Liegen kommen. Dadurch können der Wärmeleitkörper (wie z.B. in Fig. 4 dargestellt) oder die Kühlerwand (vgl. die linke Kühlerwand in Fig. 2) mit einer planen Wandung ausgestaltet werden und mit dieser planen Wandung die Profilelemente thermisch kontaktieren. Hierdurch sind die Fertigung und die Montage vereinfacht.

Um eine gute Wärmeleitung sowie einen Toleranzausgleich zwischen dem Wärmeableitkörper oder der Kühlerwand den Profilelementen zu erhalten, kann zwischen diesen Elementen eine elastische, Wärme leitende Schicht vorgesehen sein.

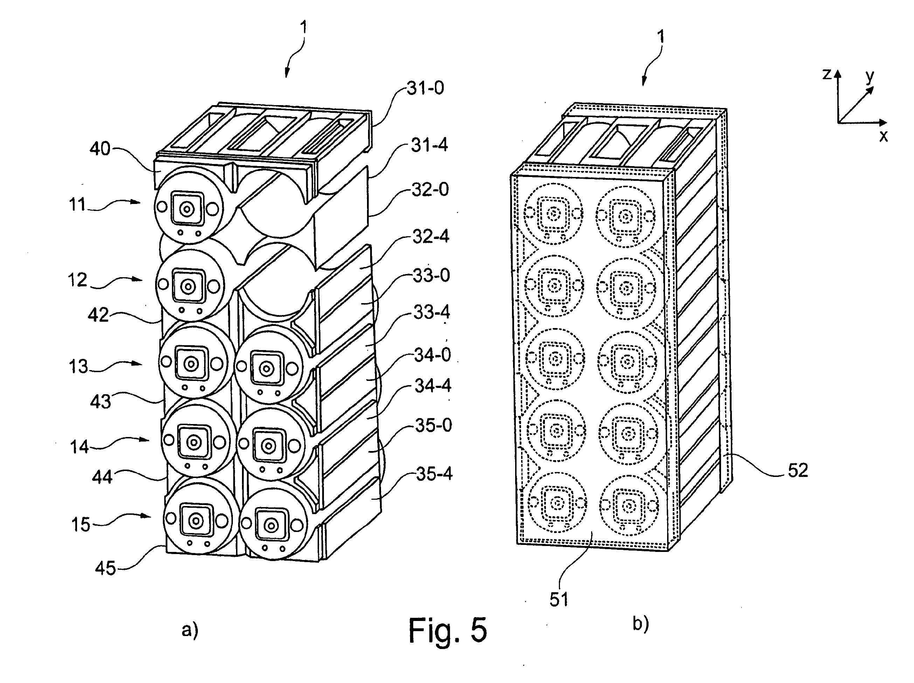

Die Figuren 5a, 5b zeigen in einer perspektivischen Darstellung eine erfindungsgemäße Vorrichtung zur Spannungsversorgung 1 vor (Fig. 5a) und nach (Fig. 5b) der vollständigen Montage. Die Speicherzellenanordnung umfasst dort beispielhaft fünf Speicherzellengruppen 11, 12, 13, 14, 15, welche übereinander (d.h. sich in z-Richtung erstreckend) angeordnet sind. In der bereits beschriebenen Art und Weise sind oberhalb der Speicherzellengruppe 11 sowie zwischen den Speicherzellengruppen 11 und 12, 12 und 13, 13 und 14, 14 und 15 sowie unterhalb der Speicherzellengruppe 15 Profilelemente in Gestalt von Metallblechen eingelegt, welche den Wärmeaustausch zwischen den einzelnen Speicherzellen sowie der in Fig. 5a, 5b nicht dargestellten Wärme leitenden Kühleinrichtung ermöglichen. Aus Fig. 5a ist ferner gut ersichtlich, dass zwischen jeweiligen unteren Profilelementen (-u) und oberen Profilelementen (-o) Trägerelemente 42, 43, 44 vorgesehen sind. Solche Trägerelemente sind in angepasster Form auch oberhalb der Speicherzellengruppe 11 bzw. des Profilelements 31-o (Bezugszeichen 40) und unterhalb der Speicherzellengruppe 15 bzw. des Profilelements 35-u (Bezugszeichen 45) vorgesehen.

Um eine Verspannung in z-Richtung zu bewirken und hierdurch die Profilelemente 31-o, 31-u, ..., 35-o, 35-u mit den Speicherzellen in guten thermischen Kontakt zu bringen, sind Spannvorrichtungen 51, 52 vorgesehen, welche in axialer Richtung der Speicherzellen (d.h. in y-Richtung) auf die Speicherzellenanordnung 10 aufgebracht werden. Dabei gelangen die Spannvorrichtungen 51, 52 in mechanischen Eingriff mit den Trägerelementen 40, 45, wodurch die gewünschte Kraft in z-Richtung erzeugt wird. Die Spannvorrichtungen 51, 52 können auf ihrer Ober- und Unterseite jeweils über einen weiteren Deckel (nicht dargestellt) miteinander mechanisch verbunden sein. Durch entsprechende Aussparungen in den Spannvorrichtungen 51, 52 ist eine elektrische Kontaktierung jeweiliger Elektroden der Speicherzellen an deren Stirnflächen möglich. Alternativ (oder unterstützend) kann die Verspannkraft auch über einen Spanngurt, Spannstifte, Spanngurte, Schrauben oder eine Verklebung der Profilelemente mit den Speicherzellen erzeugt werden, um die Anpresskraft in z-Richtung zu erzeugen. Eine Verspannung bzw. Verpressung in x-Richtung erfolgt nach Einbringung der in Fig. 5b dargstellten Vorrichtung in die Wärme leitende Kühleinrichtung. Das Einbringen der Vorrichtung 1 in die Wärme leitende Kühleinrichtung bzw. das Herausnehmen aus der Wärme leitenden Kühleinrichtung kann wahlweise in z-Richtung oder in y-Richtung erfolgen.

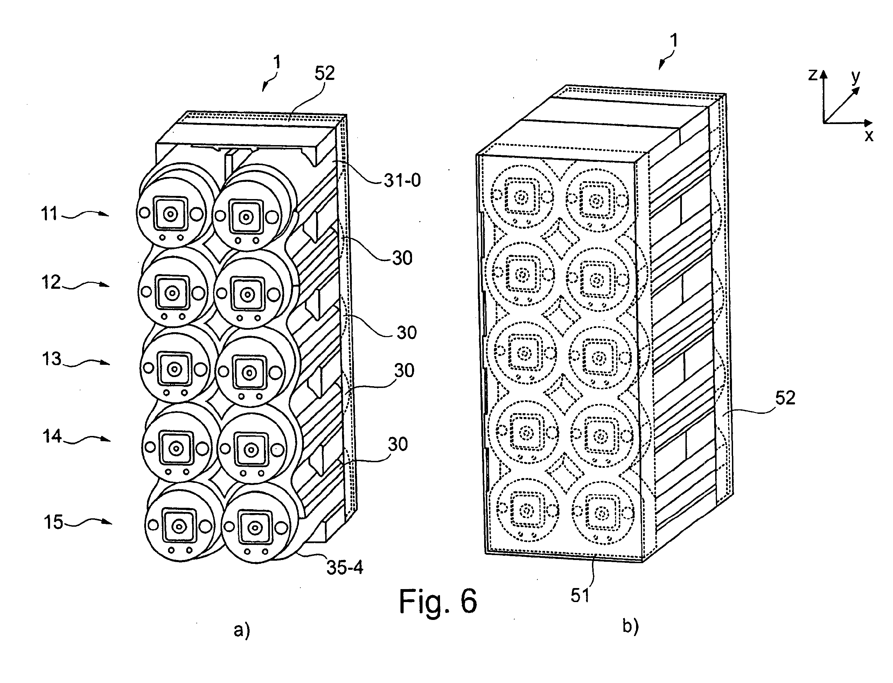

Die Figuren 6a, 6b zeigen in einer perspektivischen Darstellung eine erfindungsgemäße Vorrichtung zur Spannungsversorgung gemäß der zweiten Ausgestaltungsvariante, wobei Fig. 6a die Vorrichtung vor der endgültigen Montage und Fig. 6b die Vorrichtung nach der endgültigen Montage zeigt. Wie ohne Weiteres aus Fig. 6a zu erkennen ist, sind die Profilelemente 31-o, 30 und 35-u als Metallschalen ausgebildet. Zwischen den jeweiligen Speicherzellengruppen 11, 12, 13, 14, 15 sind die Profilelemente einstückig ausgebildet und deshalb einheitlich mit dem Bezugszeichen 30 gekennzeichnet. Die Profilelemente 30 sind mit seitlich abgeflachten Abschnitten ausgebildet, die (in der Zeichnung links und rechts der Vorrichtung) in einer gemeinsamen Ebene liegen, um die thermische Anlage einer planen Kühlerwand zu ermöglichen. Aufgrund der größeren Stabilität der Profilelemente dieser Ausgestaltungsvariante sind zwischen den einzelnen Profilelementen keine Trägerelemente notwendig. Die Verspannung in z-Richtung erfolgt wieder durch das Aufbringen der Spannvorrichtungen 51, 52 von den Stirnflächen der Speicherzellen her. Die notwendige Spannkraft wird dabei durch die Formgebung der Spannvorrichtungen 51, 52 (gut ersichtlich in Fig. 6a) sichergestellt. Darüber hinaus können die Spannvorrichtungen 51, 52 wiederum auf deren Ober- und Unterseite mit einem Deckel versehen sein, so dass sich die Spannvorrichtungen 51, 52 nicht von der Speicherzellenanordnung 10 lösen können. Die in Fig. 6b dargestellte Vorrichtung zur Spannungserzeugung 1 kann wiederum in z- oder y-Richtung in eine Wärme leitende Kühleinrichtung (nicht dargestellt) eingeführt oder herausgenommen werden, wodurch die weiterhin vorteilhafte Verspannung bzw. Verpressung in x-Richtung sichergestellt ist.

Nach dem Aufbringen der Spannvorrichtungen 51, 52 nach den Ausführungsbeispielen gemäß Figuren 5 und 6 erfolgt eine Verschweißung der Speicherzellen mittels Zellverbindem. Die in Fig. 5b/6b nicht dargestellten Deckel sorgen für eine elektrische Isolierung, um ein einfaches Handling sicherzustellen.

### Bezugszeichenliste

- 1: Vorrichtung zur Spannungsversorgung
- 10: Speicherzellenanordnung
- 11: Speicherzellengruppe / Doppelschichtkondensatorgruppe
- 12: Speicherzellengruppe / Doppelschichtkondensatorgruppe
- 13: Speicherzellengruppe / Doppelschichtkondensatorgruppe
- 14: Speicherzellengruppe / Doppelschichtkondensatorgruppe
- 15: Speicherzellengruppe / Doppelschichtkondensatorgruppe
- 11-1: Speicherzelle / Doppelschichtkondensator
- 11-2: Speicherzelle / Doppelschichtkondensator
- 12-1: Speicherzelle / Doppelschichtkondensator
- 13-2: Speicherzelle / Doppelschichtkondensator
- 20: Kühleinrichtung
- 21-1: Kühlerwand
- 21-2: Kühlerwand
- 22-1: Wärmeleitkörper
- 22-2: Wärmeleitkörper
- 23-2: Kühlkanal
- 24-2: Kühlkanal
- 25-2: Kühlkanal
- 30-1: erster Anlageabschnitt
- 30-2: zweiter Anlageabschnitt
- 30-31: dritter Anlageabschnitt
- 30-32: dritter Anlageabschnitt
- 31-o: Profilelement
- 31-u: Profilelement
- 32-o: Profilelement
- 32-u: Profilelement
- 33-o: Profilelement
- 33-u: Profilelement
- 34-o: Profilelement
- 34-u: Profilelement
- 35-o: Profilelement
- 35-u: Profilelement
- 40: Trägerelement
- 41: Trägerelement
- 42: Trägerelement
- 43: Trägerelement
- 44: Trägerelement
- 45: Trägerelement
- 51: erster Spannvorrichtung
- 52: zweite Spannvorrichtung
- 60: Verspannung
- 61: Verspannung
- 62: Verspannung

## Patentansprüche

1. Vorrichtung zur Spannungsversorgung (1) eines Kraftfahrzeugs, insbesondere eines Pkw, Lkw oder eines Motorrads, mit einer Speicherzellenanordnung (10), die ein oder mehrere elektrochemische Speicherzellen- und/oder Doppelschichtkondensatorgruppen (11, 12, 13, 14, 15) umfasst, die übereinander angeordnet sind, und jeweils mindestens zwei nebeneinander angeordnete Speicherzellen und/oder Doppelschichtkondensatoren aufweisen wobei die Speicherzellen und/oder Doppelschichtkondensatoren (11-1, 11-2, 12-1, 12-2) einer jeweiligen Speicherzellengruppe (11, 12, 13, 14, 15) durch zumindest ein Wärme leitendes Profilelement (30; 31-o, 31-u, ..., 35-o, 35-u) thermisch miteinander verbunden sind, welches einen Wärmeübergang zwischen den Speicherzellen und/oder Doppelschichtkondensatoren (11-1, 11-2, 12-1, 12-2) der Speicherzellengruppe ermöglicht, wobei das Profilelement in einem zwischen zwei benachbarten Speicherzellen- und/oder Doppelschichtkondensatorgruppen bestehenden Zwischenraum angeordnet ist und mit den Speicherzellen und/oder Doppelschichtkondensatoren beider Gruppen in Kontakt ist wobei die Speicherzellen und/oder Doppelschichtkondensatoren (11-1, 11-2, 12-1, 12-2) der Speicherzellenanordnung (10) eine Mantelfläche sowie durch die Mantelfläche verbundene kreisförmige Grund- und Deckfläche mit jeweiligen Elektroden aufweisen, wobei das zumindest eine Profilelement (30; 31-o, 31-u, ..., 35-o, 35-u) zumindest mit den Mantelflächen der Speicherzellen und/oder Doppelschichtkondensatoren (11-1, 11-2, 12-1, 12-2) einer Speicherzellengruppe (11, 12, 13, 14, 15) in thermischen Kontakt steht, wobei hierzu das zumindest eine Profilelement (30; 31-o, 31-u, ..., 35-o, 35-u) eine an die Oberflächengestalt der Mantelflächen der Speicherzellen und/oder Doppelschichtkondensatoren (11-1, 11-2, 12-1, 12-2) einer Speicherzellengruppe (11, 12, 13, 14, 15) angepasste Form aufweist, und ferner einen flügelartigen Querschnitt aufweist, welcher einen ersten Anlageabschnitt (30-1), der mit der Mantelfläche einer ersten Speicherzelle und/oder eines ersten Doppelschichtkondensators der Speicherzellengruppe (11, 12, 13, 14, 15) in thermischen Kontakt steht, und einen zweiten Anlageabschnitt (30-2) aufweist, der mit der Mantelfläche einer zweiten Speicherzelle und/oder eines zweiten Doppelschichtkondensators der Speicherzellengruppe (11, 12, 13, 14, 15) in thermischen Kontakt steht, wobei der erste und der zweite Anlageabschnitt (30-1, 30-2) in einem Bereich zwischen der ersten und der zweiten Speicherzelle und/oder dem Doppelschichtkondensator (11-1, 11-2, 12-1, 12-2) einstückig miteinander verbunden sind wobei die Speicherzellenanordnung (10) mit einer Wärme leitenden Kühleinrichtung, die die von den Speicherzellen und/oder Doppelschichtkondensatoren (11-1, 11-2, 12-1, 12-2) zugeführte Wärme abführt, derart kraftschlüssig lösbar verbunden ist, dass zumindest manche der Speicherzellen und/oder Doppelschichtkondensatoren (11-1, 11-2, 12-1, 12-2) jeweils mit der Wärme leitenden Kühleinrichtung thermisch verbunden sind, **dadurch gekennzeichnet daß** die Wärme leitende Kühleinrichtung (20) eine Kühlerwand (21-1, 21-2) umfasst, welche an den Seitenwänden der Speicherzellenanordnung (10) vorgesehen ist, und Kühlkanäle (23-2, 24-2, 25-2) aufweist, die von einem Wärme abführenden Medium, insbesondere einem Kältemittel, wie R 134a, Kohlendioxid R 744, Wasser oder Luft, durchströmt oder umströmt werden,
wobei die Kühlerwand durchgängig und Kühlmittelöffnungslos ausgebildet ist und sich über die Speicherzellen- und/oder Doppelschichtkondensatorengruppen erstreckt, wobei das Zuführen der Wärme von den Speicherzellen und/oder Doppelschichtkondensatoren der einzelnen Gruppen an die Kühleinrichtung durch eine Wärme übertragung erfolgt, die an Kontaktflächen stattfindet, die zwischen den Profilelementen und der Kühlerwand oder einem zwischen der Profilelementen und der Kühlerwand angeordneten Wärmeleitkörper gegeben sind.

2. Vorrichtung nach Anspruch 1, **dadurch gekennzeichnet, dass** das zumindest eine Profilelement (30; 31-o, 31-u, ..., 35-o, 35-u) aus einem gut Wärme leitenden Material, insbesondere einem Metallblech oder einer Metallschale oder einem gefüllten Kunststoffelement, gebildet ist.

3. Vorrichtung nach Anspruch 1, **dadurch gekennzeichnet, dass** sich an die freien Enden des ersten und des zweiten Anlageabschnitts des zumindest einen Profilelements (30; 31-o, 31-u, ..., 35-o, 35-u) jeweils ein dritter Anlageabschnitt (30-31, 30-32) anschließt, der mit der Wärme leitenden Kühleinrichtung (20) in mechanischen und thermischen Kontakt steht.

4. Vorrichtung nach Anspruch 1, **dadurch gekennzeichnet, dass** ein Teil des ersten und des zweiten Anlageabschnitts (30-1, 30-2) jeweils mit der Wärme leitenden Kühleinrichtung (20) in mechanischen und thermischen Kontakt steht.

5. Vorrichtung nach Anspruch 4, **dadurch gekennzeichnet, dass** der erste bzw. der zweite Anlageabschnitt (30-1, 30-2) des zumindest einen Profilelements (31-o, 31-u, 32-o, 32-u) jeweils in einem der Wärme leitenden Kühleinrichtung (20) zugewandten Bereich in einer gemeinsamen ersten bzw. in einer gemeinsamen zweiten Ebene zum Liegen kommen, wodurch eine jeweilige plane Wandung der Wärme leitenden Kühleinrichtung (20) in mechanischen und thermischen Kontakt mit dem ersten und dem zweiten Anlageabschnitt (30-1, 30-2) gebracht werden kann.

6. Vorrichtung nach einem der Ansprüche 1 bis 5, **dadurch gekennzeichnet, dass** zwischen zwei übereinander angeordneten Speicherzellengruppen (11, 12, 13, 14, 15) zwei Profilelemente (30; 31-o, 31-u, ..., 35-o, 35-u) symmetrisch bezüglich einer Ebene angeordnet sind, welche senkrecht zur Erstreckungsrichtung der Speicherzellengruppen (11, 12, 13, 14, 15) verläuft.

7. Vorrichtung nach Anspruch 6, **dadurch gekennzeichnet, dass** die zwei Profilelemente (31-o, 31-u, ..., 35-o, 35-u) einstückig ausgebildet oder zwei separate Bauteile sind.

8. Vorrichtung nach Anspruch 6 oder 7, **dadurch gekennzeichnet, dass** zwischen den zwei Profilelementen (30; 31-o, 31-u, ..., 35-o, 35-u) ein formangepasstes Trägerelement (41, 42, 43, 44, 45), insbesondere aus Kunststoff, vorgesehen ist.

9. Vorrichtung nach Anspruch 3, **dadurch gekennzeichnet, dass** die Kühlerwand (21-1, 21-2) eine plane Fläche umfasst, mit der sie an den dritten Anlageabschnitten des zumindest einen Profilelements (30; 31-o, 31-u, ..., 35-o, 35-u) anliegt.

10. Vorrichtung nach Anspruch 1, **dadurch gekennzeichnet, dass** die Kühlerwand (21-1, 21-2) eine zu der Speicherzellenanordnung (10) inverse Gestalt, insbesondere mit einem Graben zwischen zwei Speicherzellen und/oder Doppelschichtkondensatoren (11-1, 11-2, 12-1, 12-2), aufweist, wobei in dem Graben ein Kühlkanal (23-2, 24-2, 25-2) verläuft.

11. Vorrichtung nach einem der vorherigen Ansprüche, **dadurch gekennzeichnet, dass** die an den zwei gegenüberliegenden Seiten der Speicherzellenanordnung (10) vorgesehenen Wärme leitenden Kühleinrichtungen (20) zwischen zumindest zwei Speicherzellenund/oder Doppelschichtenkondensatoren hindurch miteinander verspannt sind, um eine Anpresskraft zwischen den Profilelementen (30; 31-o, 31-u, ..., 35-o, 35-u) und den Speicherzellen zu erzeugen.

12. Vorrichtung nach einem der vorherigen Ansprüche, **dadurch gekennzeichnet, dass** die Wärme leitende Kühleinrichtung (20) einen an die Gestalt der Speicherzellenanordnung angepassten Wärmeleitkörper (22-1, 22-2) umfasst, mit dem die Kühlerwand (21-1, 21-2) Wärme leitend verbunden ist.

13. Vorrichtung nach einem der vorherigen Ansprüche, **dadurch gekennzeichnet, dass** die Speicherzellenanordnung in Erstreckungsrichtung der übereinander angeordneten Speicherzellen- und/oder Doppelschichtkondensatorgruppen (11, 12, 13, 14, 15) durch zumindest eine Spannvorrichtung (51, 52), insbesondere aus Kunststoff, mit einer Vorspannkraft beaufschlagt sind.

14. Vorrichtung nach einem der vorherigen Ansprüche, **dadurch gekennzeichnet, dass** in axialer Richtung der Speicherzellen und/oder Doppelschichtkondensatoren (11-1, 11-2, 12-1, 12-2) eine Fixierung vorgesehen ist, welche kraft- und/oder formschlüssig mit der Spannvorrichtung (51, 52) verbunden ist.

## Claims

1. A device for supplying voltage (1) to a motor vehicle, especially a car, lorry or motorcycle, comprising a storage cell arrangement (10) comprising one or more electrochemical storage cells and/or double-layer capacitor groups (11, 12, 13, 14, 15) disposed one above the other, and each comprising two adjacent storage cells and/or double-layer capacitors, wherein the storage cells and/or double-layer capacitors (11-1, 11-2, 12-1, 12-2) in each storage-cell group (11, 12, 13, 14, 15) are thermally interconnected by at least one heat-conducting profile element (30, 31-o, 31-u, ..., 35-o, 35-u), providing a heat transfer between the storage cells and the double-layer capacitors (11-1, 11-2, 12-1, 12-2) in the storage-cell group, wherein the profile element is disposed in a space between two neighbouring storage-cell and/or double-layer capacitor groups and is in contact with the storage cells and/or double-layer capacitors in both groups, wherein the storage cells and/or double-layer capacitors (11-1, 11-2, 12-1, 12-2) in the storage-cell arrangement (10) have a surface area and a circular base and cover surface connected by the surface area to respective electrodes, wherein the at least one profile element (30; 31-o, 31-u, ..., 35-o, 35-u) is in thermal contact at least with the surfaces of the storage cells and/or double-layer capacitors (11-1, 11-2, 12-1, 12-2) in a group of storage cells (11, 12, 13, 14, 15) to which end the at least one profile element (30; 31-o, 31-u, ..., 35-o, 35-u) has a shape adapted to that of the surfaces of the storage cells and/or double-layer capacitors (11-1, 11-2, 12-1, 12-2) of a storage-cell group (11, 12, 13, 14, 15), and also has a wing-like cross-section comprising a first portion (30-1) in thermal contact with the surface of a first storage cell and/or a first double-layer capacitor in the group (11, 12, 13, 14, 15) and a second portion (30-2) in thermal contact with the surface of a second storage cell and/or a second double-layer capacitor in the group (11, 12, 13, 14, 15), wherein the first and the second portion (30-1, 30-2) are integrally connected in a region between the first and the second storage cell and/or the double-layer capacitor (11-1, 11-2, 12-1, 12-2) wherein the storage-cell arrangement (10) is non-positively and releasably connected to a heat-conducting cooling arrangement which discharges the heat supplied by the storage cells and/or double-layer capacitors (11-1, 11-2, 12-1, 12-2) so that at least many of the storage cells and/or double-layer capacitors (11-1, 11-2, 12-1, 12-2) are each thermally connected to the heat-conducting cooling arrangement, **characterised in that** the heat-conducting cooling device (20) comprises a cooling wall (21-1, 21-2) provided on the side walls of the storage-cell arrangement (10) and cooling ducts (23-2, 24-2, 25-2) flowed through or flowed round by a heat-dissipating medium, especially a cooling agent such as R134a, carbon dioxide R744, water or air wherein the cooling wall is continuous and without coolant openings and extends over the groups of storage cells and/or double-layer capacitors, wherein heat is supplied by the storage cells and/or double-layer capacitors in individual groups to the cooling device through heat transfer at contact surfaces between the profile elements and the cooler wall or between the profile elements and heat-conducting members disposed between the profile elements and the cooler wall.

2. A device according to claim 1, **characterised in that** the at least one profile element (30; 31-o, 31-u, ..., 35-o, 35-u) is made of a good heat-conducting material, especially a metal sheet or metal dish or a cored plastics material element.

3. A device according to claim 1, **characterised in that** the free ends of the first and the second portion of the at least one profile element (30; 31-o, 31-u, ..., 35-o, 35-u) each adjoin a third portion (30-31, 30-32) mechanically and thermally connected to the heat-conducting cooling device (20).

4. A device according to claim 1, **characterised in that** a part of the first and of the second portion (30-1, 30-2) are respectively in mechanical and thermal contact with the heat-conducting cooling device (20).

5. A device according to claim 4, **characterised in that** the first and/or second portion (30-1, 30-2) of the at least one profile element (31-o, 31-u, 32-o, 32-u) each comes to lie in a common first or a common second plane in a region facing the heat-conducting cooling device (20.), whereby a respective flat wall of the heat-conducting cooling device (20) can be brought into mechanical and thermal contact with the first and the second portion (30-1, 30-2).

6. A device according to any of claims 1 to 5, **characterised in that** two profile elements (30; 31-o, 31-u, ..., 35-o, 35-u) are disposed between two superposed storage cell groups (11, 12, 13, 14, 15) symmetrically relative to a plane extending at right angles to the direction in which the storage cell groups (11, 12, 13, 14, 15) extend.

7. A device according to claim 6, **characterised in that** the two profile elements (31-o, 31-u, ..., 35-o, 35-u) are in one piece or are two separate components.

8. A device according to claim 6 or claim 7, **characterised in that** a suitably shaped bearing element (41, 42, 43, 44, 45), especially of plastics material, is provided between the two profile elements (30; 31-o, 31-u, ..., 35-o, 35-u).

9. A device according to claim 3, **characterised in that** the cooling wall (21-1, 21-2) has a flat surface adjoining the third portions of the at least one profile element (30; 31-o, 31-u, ..., 35-o, 35-u).

10. A device according to claim 1, **characterised in that** the cooling wall (21-1, 21-2) has a shape opposite to that of the storage-cell arrangement (10), especially with a gutter between two storage cells and/or double-layer capacitors (11-1, 11-2, 12-1, 12-2), a cooling duct (23-2, 24-2, 25-2) extending in the ditch.

11. A device according to any of the preceding claims, **characterised in that** the cooling arrangements (20) conducting heat to the two opposite sides of the storage-cell arrangement (10) are clamped together between at least two storage cells and/or double-layer capacitors in order to generate a compressive force between the profile elements (30; 31-o, 31-u, ..., 35-o, 35-u) and the storage cells.

12. A device according to any of the preceding claims, **characterised in that** the heat-conducting cooling device (20) comprises a heat-conducting member (22-1, 22-2) adapted to the shape of the storage-cell arrangement and thermally connected to the cooling wall (21-1, 21-2).

13. A device according to any of the preceding claims, **characterised in that** in the direction in which the superposed storage cells and/or double layer capacitor groups (11, 12, 13, 14, 15) extend, the storage-cell arrangement is prestressed by at least one clamping device (51, 52), especially of plastics material.

14. A device according to any of the preceding claims, **characterised in that** a fixing device positively and/or non-positively connected to the clamping device (51, 52) is provided in the axial direction of the storage cells and/or double-layer capacitors (11-1, 11-2, 12-1, 12-2).

## Revendications

1. Dispositif d'alimentation en tension (1) d'un véhicule automobile, en particulier d'une voiture particulière, d'un véhicule utilitaire ou d'une motocyclette comportant un dispositif de cellules d'accumulation (10) qui comporte un ou plusieurs groupes de cellules d'accumulation électrochimiques et/ou de condensateurs à double couche (11-1, 11-2, 12-1, 12-2) montés les uns au-dessus des autres, et comprennent respectivement au moins deux cellules d'accumulation et/ou condensateurs à double couche montés côte à côte, les cellules d'accumulation et/ou les condensateurs à double couche (11-1, 11-2, 12-1, 12-2) d'un groupe de cellules d'accumulation (11, 12, 13, 14, 15) respectif étant thermiquement reliés par au moins un élément profilé (30, 31-o, 31u, ..., 35-o, 35-u) thermiquement conducteur qui permet un transfert de chaleur entre les cellules d'accumulation et/ou les condensateurs à double couche (11-1, 11-2, 12-1, 12-2) des groupes de cellules d'accumulation, l'élément profilé étant monté dans un espace intermédiaire situé entre deux groupes de cellules d'accumulation et/ou de condensateurs à double couche voisins et étant en contact avec les cellules d'accumulation et/ou les condensateurs à double couche des deux groupes, dans lequel les cellules d'accumulation et/ou les condensateurs à double couche (11-1, 11-2, 12-1, 12-2) du dispositif de cellules d'accumulation (10) comportant une surface enveloppe ainsi que des surfaces de base et de couverture circulaires reliées par la surface enveloppe et ayant des électrodes respectives, l'élément profilé (30, 31-o, 31u, ..., 35-o, 35-u) étant en contact thermique au moins avec les surfaces enveloppes des cellules d'accumulation et/ou des condensateurs à double couche (11-1, 11-2, 12-1, 12-2) d'un groupe de cellules d'accumulation (11, 12, 13, 14, 15), à cet effet, au moins un élément profilé (30, 31-o, 31u, ..., 35-o, 35-u) présentant une forme adaptée à la configuration surfacique des surfaces enveloppes des cellules d'accumulation et/ou des condensateur à double couche (11-1, 11-2, 12-1, 12-2) d'un groupe de cellules d'accumulation (11, 12, 13, 14, 15) et ayant en outre une section transversale en forme d'aile qui comporte un premier segment d'appui (30-1) qui est en contact thermique avec la surface enveloppe d'une première cellule d'accumulation et/ou d'un premier condensateur à double couche du groupe de cellules d'accumulation (11, 12, 13, 14, 15) ainsi qu'un second segment d'appui (30-2) qui est en contact thermique avec la surface enveloppe d'une seconde cellule d'accumulation et/ou d'un second condensateur à double couche du groupe de cellules d'accumulation (11, 12, 13, 14, 15), le premier et le second segment d'appui (30-1, 30-2) étant reliés en une seule pièce dans une zone située entre la première et la seconde cellule d'accumulation et/ou le premier et le second condensateur à double couche (11-1, 11-2, 12-1, 12-2), le dispositif de cellules d'accumulation (10) étant relié de façon amovible par une liaison par la force avec un dispositif de refroidissement thermiquement conducteur qui évacue la chaleur fournie aux cellules d'accumulation et/ou aux condensateurs à double couche (11-1, 11-2, 12-1, 12-2) de sorte qu'au moins certaines des cellules d'accumulation et/ou certains des condensateurs à double couche (11-1, 11-2, 12-1, 12-2) soient respectivement reliés thermiquement reliés au dispositif de refroidissement thermiquement conducteur,
**caractérisé en ce que**
le dispositif de refroidissement thermiquement conducteur (20) comporte une paroi de refroidissement (21, 21-2) prévue sur les parois latérales du dispositif de cellules d'accumulation (10), et comportant des canaux de refroidissement (23-2, 24-2, 25-2) qui sont traversés ou baignés par un milieu dissipant la chaleur, en particulier un agent de refroidissement tel que R 134a, du dioxyde de carbone R 744, de l'eau ou de l'air, la paroi de refroidissement étant continue et sans ouvertures pour l'agent de refroidissement et s'étendant sur les groupes de cellules d'accumulation et/ou de condensateurs à double couche, le transfert de chaleur des cellules d'accumulation et/ou des condensateurs à double couche des différents groupes au dispositif de refroidissement s'effectuant par une transmission de chaleur se produisant sur des surfaces de contact définies entre les éléments profilés et la paroi de refroidissement ou un corps thermiquement conducteur situé entre les éléments de refroidissement et la paroi de refroidissement.

2. Dispositif conforme à la revendication 1,
**caractérisé en ce que**
l'élément profilé (30, 31-o, 31u, ..., 35-o, 35-u) est réalisé en un matériau bon conducteur de la chaleur, en particulier une tôle métallique ou une coquille métallique ou un élément en matériau synthétique rempli.

3. Dispositif conforme à la revendication 1,
**caractérisé en ce que**
sur les extrémités libres du premier et du second segment d'appui de l'élément profilé (30, 31-o, 31u, ..., 35-o, 35-u) se raccorde respectivement un troisième segment d'appui (30-31, 30-32) qui est en contact mécanique et thermique avec le dispositif de refroidissement thermiquement conducteur (20).

4. Dispositif conforme à la revendication 1,
**caractérisé en ce qu'**
une partie du premier et du second segment d'appui (30-1, 30-2) est respectivement en contact mécanique et thermique avec le dispositif de refroidissement (20) thermiquement conducteur.

5. Dispositif conforme à la revendication 4,
**caractérisé en ce que**
le premier ou le second segment d'appui (30-1, 30-2) de l'élément profilé (31-o, 31u, ..., 32-o, 32-u) sont respectivement situé dans un premier ou dans un second plan commun dans une zone tournée vers le dispositif de refroidissement thermiquement conducteur, une paroi plane respective du dispositif de refroidissement thermiquement conducteur (20) pouvant être mis en contact mécanique et thermique avec le premier et le second segment d'appui (30-1, 30-2).

6. Dispositif conforme à l'une des revendications 1 à 5,
**caractérisé en ce qu'**
entre deux groupes de cellules d'accumulation montés l'un sur l'autre (11, 12, 13, 14, 15) sont montés deux éléments profilés (30, 31-o, 31u, ..., 35-o, 35-u) symétriques par rapport à un plan qui s'étendent perpendiculairement à la direction d'extension des groupes de cellules d'accumulation (11, 12, 13, 14, 15).

7. Dispositif conforme à la revendication 6,
**caractérisé en ce que**
les deux éléments profilés (31-o, 31u, ..., 35-o, 35-u) sont réalisés en une seule pièce ou sont constitués par deux éléments séparés.

8. Dispositif conforme à la revendication 6 ou 7,
**caractérisé en ce qu'**
entre deux éléments profilés (30, 31-o, 31u, ..., 35-o, 35-u) est prévu un élément support de forme adaptée (41, 42, 43, 44, 45) en particulier en matériau synthétique.

9. Dispositif conforme à la revendication 3,
**caractérisé en ce que**
la paroi de refroidissement (21-1, 21-2) comporte une surface plane par laquelle elle s'appuie sur le troisième segment d'appui de l'élément profilé (30, 31-o, 31u, ..., 35-o, 35-u).

10. Dispositif conforme à la revendication 1,
**caractérisé en ce que**
la paroi de refroidissement (21-1, 21-2) a une configuration inverse de celle du dispositif de cellules d'accumulation (10) en particulier avec un fossé entre deux cellules d'accumulation et/ou entre deux condensateurs à double couche (11-1, 11-2, 12-1, 12-2), un canal de refroidissement (23-2, 24-2, 25-2) s'étendant dans les fossés.

11. Dispositif conforme à l'une des revendications précédentes,
**caractérisé en ce que**
les dispositifs de refroidissement thermiquement conducteurs (20) situés sur les deux faces opposées du dispositif de cellules de refroidissement (10) sont comprimés entre au moins deux cellules d'accumulation et/ou condensateurs à double couche pour produire une force de compression entre les éléments profilés (30, 31-o, 31u, ..., 35-o, 35-u) et les cellules d'accumulation.

12. Dispositif conforme à l'une des revendications précédentes,
**caractérisé en ce que**
le dispositif de refroidissement thermiquement conducteur (20) comporte un corps thermiquement conducteur (22-1, 22-2) adapté à la configuration du dispositif de cellules d'accumulation et qui est relié de façon thermiquement conductrice avec la paroi de refroidissement (21-1, 21-2).

13. Dispositif conforme à l'une des revendications précédentes,
**caractérisé en ce que**
le dispositif de cellules d'accumulation est précontraint dans la direction d'extension des groupes de cellules d'accumulation et/ou de condensateurs à double couche (11, 12, 13, 14, 15) montés les uns au-dessous des autres par au moins un dispositif de serrage (51, 52) en particulier en matériau synthétique.

14. Dispositif conforme à l'une des revendications précédentes,
**caractérisé en ce qu'**
il est prévu, dans la direction axiale des cellules d'accumulation et/ou des condensateurs à double couche (11-1, 11-2, 12-1, 12-2), un élément de fixation qui est relié au dispositif de serrage (51, 52) par une liaison par la force et/ou par une liaison par la forme.
